# EUROPEAN PATENT APPLICATION

(11) **EP 4 443 370 A1**
(43) Date of publication of application: **09.10.2024**
(21) Application number: 22898325.0
(22) Date of filing: 28.10.2022
(51) Int. Cl.: G06Q 30/06

(54) **INFORMATION PROCESSING DEVICE, INFORMATION PROCESSING METHOD, AND PROGRAM**

(30) Priority: 29.11.2021 JP 2021192812
(71) Applicant: Sato Holdings Kabushiki Kaisha, Tokyo 108-0023 (JP)
(72) Inventor: OGUCHI, Kentaro, Tokyo 108-0023 (JP)
(74) Representative: Grünecker Patent- und Rechtsanwälte PartG mbB
(86) International application number: PCT/JP2022/040305
(87) International publication number: WO 2023/095540

(57) **Abstract**

An aspect of the present invention is an information processing device including a first setting unit, a second setting unit, and a display control unit. The first setting unit sets an identifier for each of products. The identifier is associated with time limit information related to an expiration date. The second setting unit sets price reduction information for each of the products. The price reduction information is associated with the time limit information related to the expiration date. The display control unit associates the identifier set by the first setting unit with the price reduction information set by the second setting unit to cause a display device to display information concerning the product.

## Description

### FIELD

The present invention relates to an information processing device, an information processing method, and a program.

### BACKGROUND

Conventionally, in the retail industry for example, labels (markdown labels) for markdown (price reduction) are attached to products for purpose of giving customers senses of bargains and increasing purchase willingness of the customers. Printers configured in such a way as to issue the markdown labels have been variously proposed.

For example, the proposed printer includes a determination means and a noting means (e.g., refer to Japanese Patent Application Laid-Open Publication No. 2000-016414). The determination means determines whether to print a plurality of pieces of price data that include price data of a list price and price data of a price lower than the list price. When the determination means determines to print a plurality of the pieces of price data, the noting means notes, near the price data of the list data, that the price is the regular one.

### BRIEF SUMMARY

### TECHNICAL PROBLEM

In a case of making markdown, a store staff in a retail business such as a supermarket makes work (markdown work). The markdown work includes visually checking a time limit such as a best-before date of each product. The markdown work includes issuing markdown labels to markdown-target products having the close time limits such as the best-before dates determined based on a rule of the store itself. The markdown work includes attaching the markdown labels to the markdown-target products. The markdown is made several times a day in some cases. Thus, working time required for the markdown work is excessively long. The markdown work is made in a time zone of evening or night in many cases. Thus, a burden on the store staff becomes large in such cases.

Meanwhile, in a case of not making the markdown work, reduced prices are not communicated to consumers. Thus, products having close time limits such as best-before dates remain unsold, which ultimately leads to a food loss. For this reason, the markdown work cannot be eliminated in stores in the present situation.

In view of the above, an object of the present invention is to improve efficiency of work in a case of changing a product price in a store.

### SOLUTION TO PROBLEM

An aspect of the present invention is an information processing device including a first setting unit, a second setting unit, and a display control unit. The first setting unit sets an identifier for each of products. The identifier is associated with time limit information related to an expiration date. The second setting unit sets price reduction information for each of the products. The price reduction information is associated with the time limit information related to the expiration date. The display control unit cause a display device to display information concerning the product, associating the identifier set by the first setting unit with the price reduction information set by the second setting unit.

### ADVANTAGEOUS EFFECTS

According to an aspect of the present invention, efficiency of work in a case of changing a product price in a store can be improved.

### BRIEF DESCRIPTION OF DRAWINGS

FIG. 1 exemplifies a store to which a price presentation system according to a first embodiment is applied.
FIG. 2 exemplifies a label attached to a product in the price presentation system according to the first embodiment.
FIG. 3 illustrates a state in which a plurality of products each with the label illustrated in FIG. 2 are placed.
FIG. 4 illustrates a display example of an electronic shelf label in a store in the price presentation system according to the first embodiment.
FIG. 5 illustrates a setting example and an operation example of markdown codes in the price presentation system according to the first embodiment.
FIG. 6 illustrates a data configuration example of a product stock database.
FIG. 7 is a block diagram illustrating a system configuration of the price presentation system according to the first embodiment.
FIG. 8 is a sequence chart illustrating operation of the price presentation system according to the first embodiment.
FIG. 9 illustrates a setting example and an operation example of markdown codes in a price presentation system according to a second embodiment.
FIG. 10 illustrates a display example of the electronic shelf label in the store in the price presentation system according to the second embodiment.
FIG. 11 illustrates an operation mode of a price presentation system according to a third embodiment.
FIG. 12 is a block diagram illustrating a system configuration of the price presentation system according to the third embodiment.
FIG. 13 illustrates an image transition example of a store application of a user terminal in the price presentation system according to the third embodiment.
FIG. 14 is a sequence chart illustrating operation of the price presentation system according to the third embodiment.
FIG. 15 illustrates an image transition example of the store application of the user terminal in a modified example of the price presentation system according to the embodiment.
FIG. 16 illustrates an image transition example of the store application of the user terminal in a modified example of the price presentation system according to the embodiment.

### DETAILED DESCRIPTION

In the present disclosure, "product information" is information that identifies a product. For example, the product information includes a product name, a product code, a product model, and the like. The product code is identification information that identifies the product.

In the present disclosure, "time limit information" of a product is information concerning an expiration date. The expiration date is an index of whether the product can be used, tasted, or consumed by a user. Examples of the expiration date includes a use time limit, a best-before date, a consuming time limit, a quality-guarantee time limit, a selling time limit, and the like. The selling time limit indicates a time limit by which a product can be sold to a consumer. The selling time limit is set by a manufacturer of the product.

A price presentation system as one embodiment of an information processing system includes a display device and an information processing device, for example. The display device is provided for a plurality of products associated with the same product information in a store and having different expiration dates such as best-before dates or consuming time limits. The information processing device can communicate with the display device. A plurality of the products associated with the same product information and having the different expiration dates such as the best-before dates or the consuming time limits are, for example, a group of products whose product codes are the same as each other, but whose expiration dates such as the best-before dates or the consuming time limits are different from each other in some cases. These products are placed at the same position (area) in a product shelf in a store in many cases. The display device is provided for displaying price reduction information for a plurality of the products having the different expiration dates such as the best-before dates or the consuming time limits. One example of the display device is an electronic shelf label or the like.

In this price presentation system, an identifier is attached to each of a plurality of the products having the different expiration dates such as the best-before dates or the consuming time limits. The identifier is associated with the time limit information of the expiration date such as the best-before date or the consuming time limit. Thus, even when a plurality of the products having the different expiration dates such as the best-before dates or the consuming time limits are placed, the identifiers enable a user in a store to distinguish expiration dates such as the best-before dates or the consumption the time limits at a glance.

The identifier is preferably one or two lines or so of letters or signs for example, from a viewpoint of being intuitively recognized by a user with ease. However, the identifier is not limited to this. The identifier may be a code, a mark, a pattern, a symbol, a design, a sketch, or the like, or may be a combination of two or more of these.

A method of attaching the identifier to the product is not limited. Examples of the method include a method of attaching, to the product or a package of the product, a label on which the identifier is printed, and a method of directly printing the identifier on the product itself.

In this price presentation system, for example, the information processing device that can communicate with the display device sets one or more identifiers associated with the products that are among a plurality of the products having the different expiration dates such as the best-before dates or the consuming time limits and that are set to be price reduction targets, based on present time. The one or more set identifiers are, for example, identifiers associated with the products whose expiration dates such as the best-before dates or the consuming time limits are close based on present time, in order that the products having the close expiration dates such as the best-before dates or the consuming time limits are set to be price reduction targets.

Next, for example, the information processing device sets price reduction information or the like for the price reduction target product. The price reduction information indicates a price reduction rate or a price reduction extent in relation to a standard price of the product. The set price reduction rate or price reduction extent may vary depending on a type (the product code or the like) of the price reduction target product, or may vary depending on a stock quantity of the price reduction target product or the identifier of the price reduction target product.

The one or more identifiers and the price reduction information or the like are displayed in association with each other by the display device. The one or more identifiers are set for each product (the product code or the like) in association with the expiration dates such as the best-before dates or the consuming time limits. The price reduction information or the like is set for each product in association with the expiration date such as the best-before date or the consuming time limit. Thus, for example, the identifier attached to each of a plurality of the products having the different expiration dates such as the best-before dates or the consuming time limits, and the price reduction information displayed in association with the identifier by the display device enables a user to immediately recognize the product whose price has been reduced, and the price reduction information such as the price reduction rate or the price reduction extent, from a plurality of the products placed in the same position in a product shelf and having the different expiration dates such as the best-before dates or the consuming time limits

The information processing device changes contents displayed by the display device, and thereby notifies a store user of products as the price reduction targets and the price reduction information. The products as the price reduction targets are among a plurality of the products having the different expiration dates such as the best-before dates or the consuming time limits. As a result, a staff in charge in the store is released from work of attaching, to products, markdown labels for making notification of products as price reduction targets. Thus, work efficiency in a case of changing product prices in the store is improved.

The following is more detailed description of the price presentation system according to the one embodiment. The following describes a case of a price reduction rate as one example of the price reduction information.

### (1) First Embodiment

The price presentation system is configured in such a way as to present, to store users or the like for example, prices (offered prices) of products in the store. In an example of the present embodiment, the store is a retail business such as a supermarket that deals in foods and the like as the products having expiration dates such as the best-before dates or the consuming time limits.

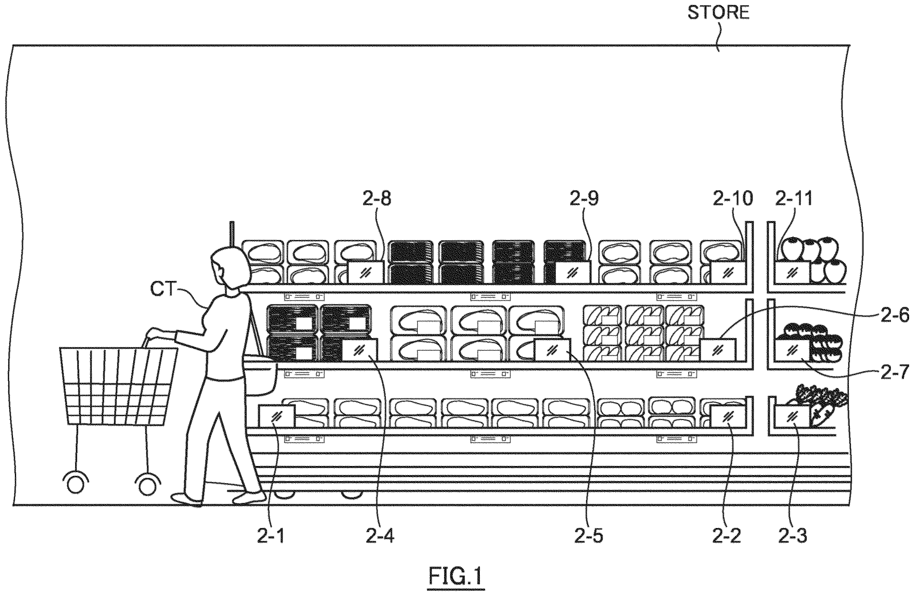

FIG. 1 illustrates one example of the store to which the price presentation system according to the one embodiment is applied. As illustrated in FIG. 1, a user CT selects a purchase target product in the store while carrying a shopping cart, for example. In the store, product groups each of which is associated with one of a plurality of different product codes are placed in a product shelf. Electronic shelf labels 2-1 to 2-11 are installed in association with the product groups of the respective product codes.

In the following description, the matters common to a plurality of the electronic shelf labels in the store are appropriately represented with "electronic shelf label 2". In the drawings, the electronic shelf label is represented as an electronic shelf label (ESL ) in some cases.

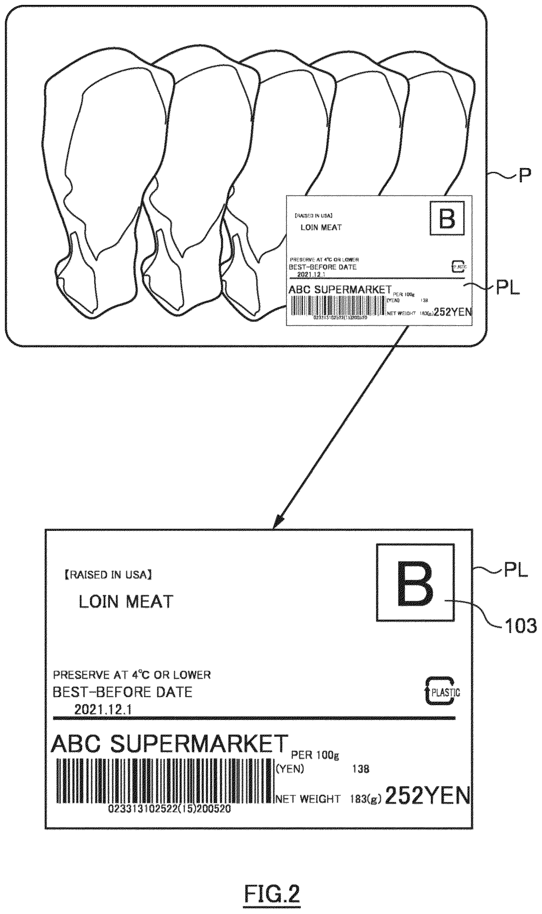

For the products to which expiration dates such as the best-before dates or the consuming time limits are set in the store, markdown codes are printed as the identifiers associated with the respective expiration dates such as the best-before dates or the consuming time limits. In the following description or the accompanying drawings, the markdown code is simply abbreviated as "code" in some cases. FIG. 2 illustrates one example of the product with the attached label on which the markdown code is printed. In the example illustrated in FIG. 2, the label PL attached to the product P includes the markdown code (in this example, "B") that is printed in a markdown code display section 103 and that is associated with expiration date such as the best-before date or the consuming time limit, for example. By a store staff or the like for example, the label PL (the label with the markdown code) is issued in advance and attached to the product P, and then, the product P is placed in a product shelf in the store. The label PL includes the printed markdown code for indicating whether or not the product Pisa price reduction target product or the like.

The products of a plurality of the different product codes are placed in the store. From a standpoint of unified operation in the store, the markdown codes are determined based on expiration dates such as the best-before dates or the consuming time limits, regardless of the product codes. For example, a term to a best-before date of a meat product is generally shorter than a term to a best-before date of a vegetable product, but the markdown codes set for meat products and vegetable products are determined based on dates and time of expiration dates such as the best-before dates or the consuming time limits of the respective products.

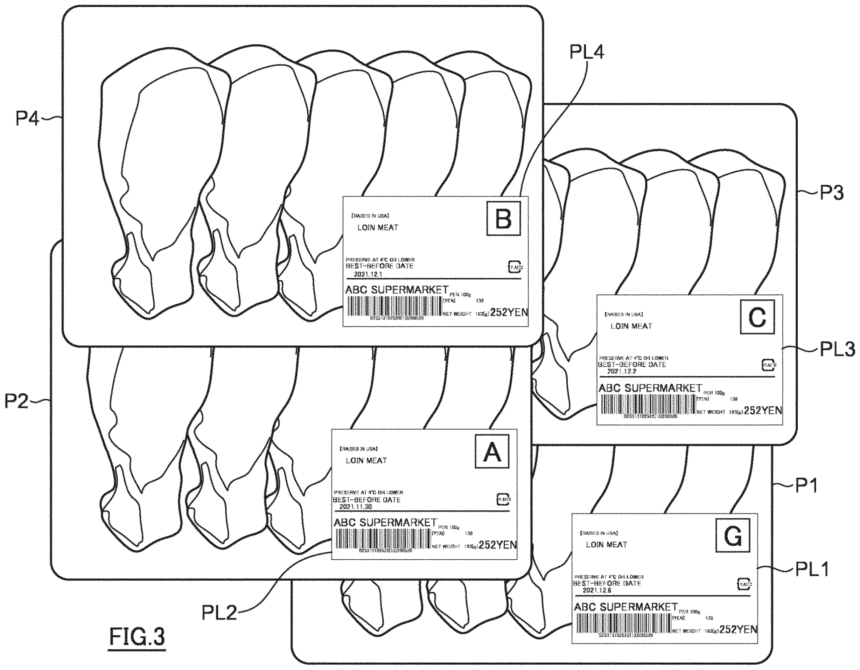

FIG. 3 illustrates a state in which a plurality of the products having different best-before dates for example for the same product code (in this example, the product code associated with "loin meat") are placed. A plurality of the products P1 to P4 to which labels PL1 to PL4 are respectively attached are illustrated as examples of a plurality of the products having different best-before dates for example for the same product code illustrated in FIG. 3. The markdown codes displayed on the respective products differ depending on the best-before dates of the individual products in some cases (in the example of FIG. 3, the markdown codes are "A", "B", "C", and "G").

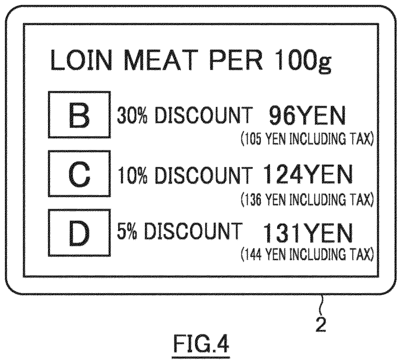

FIG. 4 illustrates a display example of the electronic shelf label 2 installed in association with a plurality of the products illustrated in FIG. 3. For the products "loin meat" of the same product code, the price reduction information displayed in this display example indicates that the product of the markdown code "B" is discounted by 30%, the product of the markdown code "C" is discounted by 10%, and the product of the markdown code "D" is discounted by 5%, for example.

A user in the store checks the display contents of the electronic shelf label 2 and then selects the product to purchase from the products P1 to P4 to which labels PL1 to PL4 and the like are attached. Thus, the user in the store can immediately recognize, from the products P4 to P4 of the same product code for example, the price reduction target products (in this example, the products P3 and P4) and the price reduction information such as the price reduction rate.

In the display example illustrated in FIG. 4, the product code (in this example, the product code associated with "loin meat") and the electronic shelf label are in one-to-one association with each other. However, there is no limitation to this. For example, when product groups of two different product codes are placed next to each other, one electronic shelf label may be caused to display price reduction information (e.g., price reduction rates associated with markdown codes) associated with the two product codes, together.

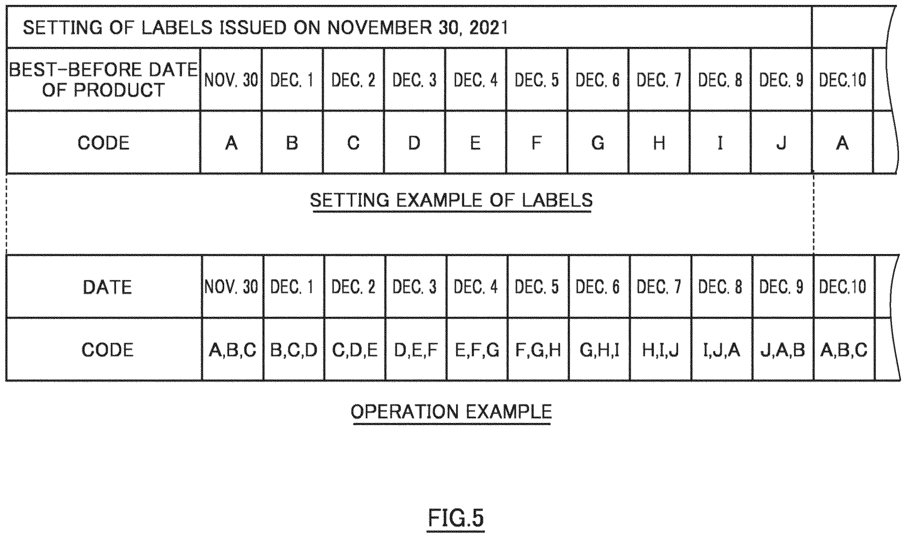

Next, a setting example and an operation example of markdown codes are described with reference to FIG. 5. FIG. 5 exemplifies the setting example ("example of label setting") of setting markdown codes to be printed on labels, and the operation example ("operation example") of price reduction of products in the store. A plurality of the markdown codes are provided depending on periods (e.g., the number of days) remaining until the best-before dates. For example, FIG. 5 illustrates the example (i.e., the example of printing or issuing the labels of the ten markdown codes) in which ten types of markdown codes A to J are assigned in advance to the products whose best-before dates arrive in a period from the present day to the ninth day in a case where the present day is November 30, 2021. In other words, on November 30, 2021, the labels can be issued comprehensively for the products whose best-before dates arrive in the period from the present day to the ninth day, and can be attached to the products. In this example, after the labels are once issued for the products whose best-before dates arrive in the period from the present day to the ninth day, other labels such as markdown labels do not need to be issued.

In FIG. 5, the markdown codes for price reduction target products change every day, and are notified to users via the electronic shelf labels associated with respective products in the store. In the operation example illustrated in FIG. 5, on November 30, 2021, price reduction target products among the products are those with the labels on each of which "A", "B", or "C" are printed as the markdown code. On December 1, 2021 of the next day, price reduction target products among the products in the store become those with the labels on each of which "B", "C", or "D" are printed as the markdown code. The same applies after December 2, 2021. In the example of FIG. 5, the markdown codes displayed on the electronic shelf labels 2 are switched every day.

In the operation example of price reduction illustrated in FIG. 5, the products whose best-before dates arrive in three days including the present day are set as price reduction target products. However, there is no limitation to this. Markdown codes associated with price reduction target products can be appropriately set. For example, in the operation example illustrated in FIG. 5, for November 30, 2021, price reduction target products among the products in the store may be the products with the labels on each of which "A" or "B" is printed as the markdown code, or may be the products with the labels on each of which "A", "B", "C", or "D" is printed as the markdown code.

For example, for December 6, 2021, the electronic shelf labels installed in association with the respective products display that the markdown code for the present day is "G," "H," or "I." Then, users can recognize that the products among the products in the store and with labels printed with "G", "H", or "I" as the markdown codes are price reduction target products on the present day. Thus, by checking the markdown code printed on the label of each product placed in the product shelf, users can recognize price reduction target products among a plurality of the products having different expiration dates such as the best-before dates or the consuming time limits, and can recognize the price reduction information such as price reduction rates of the price reduction target products.

Meanwhile, after the store staff once attaches the labels to the products, the store staff does not need to attach the markdown labels to the products again. Thus, work efficiency in the store can be improved.

Although FIG. 5 illustrates the ten types of markdown codes, there is no limitation to this. The number of types of markdown codes is appropriately determined depending on operation of the store. In FIG. 5, the different markdown codes are assigned to the different best-before dates. However, there is no limitation to this. The same markdown code may be assigned to different best-before dates. For example, in the example in FIG. 5, the markdown code assigned to a period from November 30 to December 1 is "A", the markdown code assigned to a period from December 2 to December 3 is "B", and in this manner, a setting may be made.

The setting example and the operation example of the markdown codes illustrated in FIG. 5 are applied to a plurality of products having different best-before dates associated with a specific product code. The markdown codes displayed on the labels of products in the store are determined based on the same standard, depending on the best-before dates. However, in the one embodiment, a discount rate or the like associated with each markdown code is set individually for each product code, depending on a type of a product, for example. Accordingly, concerning the different product codes, the price reduction rates or the like are different for the same markdown code displayed on the electronic shelf labels, in some cases. In other words, the price reduction rate or the like associated with the same markdown code that is set in association with the same best-before date can be set as price reduction rate or the like that differs depending on a product type (e.g., a meat product, a vegetable product, and the like), a product property (e.g., a freshness state, a freshness degree, or the like for a best-before date, a consuming time limit, or the like), a stock quantity of the product, and the like.

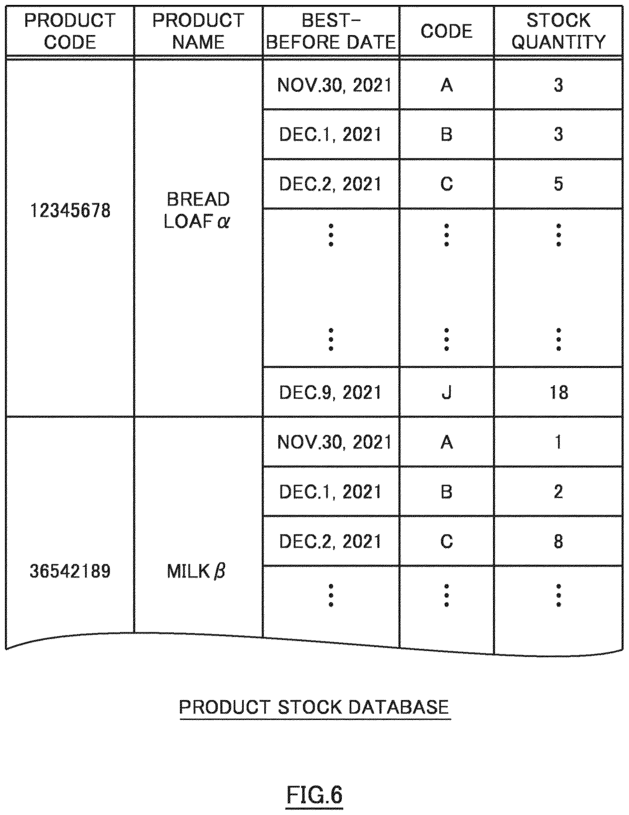

FIG. 6 illustrates an example of a product stock database that is referred to in the price presentation system of the one embodiment. In the product stock database, markdown codes for each product are associated with stock quantities. In the example of the product stock database illustrated in FIG. 6, each record includes a value in each field of "product code", "product name", "best-before date", "code", and "stock quantity". A value of the "code" field is, for example, a value of a markdown code set in association with the best-before date as illustrated in FIG. 5. One or more markdown codes displayed on the electronic shelf label in association with the best-before dates of the products of each product code, and a price reduction rate or the like associated with each markdown code are determined individually for each product code, depending on a type, a property, and a stock quantity of the product of each product code.

In the example of FIG. 6, for the product names "bread loaf α" and "milk β", when best-before dates are the same, the same markdown code (e.g., the markdown code "A") is set. However, in this case, for the bread loaf α and the milk β, types of the products, properties of the products, stock quantities of the products, and the like are different, and thus, mutually different price reduction rates or the like can be set. For example, for "bread loaf α" and "milk β", even when the best-before dates are the same, degrees of demand from consumers differ due to the different product types, and thus, different price reduction rates or the like can be set. Even when the best-before dates are the same, when a stock quantity of "bread loaf α" is larger than a stock quantity of "milk β", a price reduction rate set for "bread loaf α" becomes larger than that of "milk β". Concerning the products "bread loaf α" of the same product code for example, price reduction rates or the like can be set depending on stock quantities of the respective products, for the products (e.g., the products for each of which the markdown code "B" is set and the products for each of which the markdown code "C" is set) for which the different markdown codes are set depending on best-before dates.

Work (markdown business) of issuing and attaching markdown labels to products with a close best-before date is conventionally made. In this regard, a labor of attaching the markdown labels is troublesome. For this reason, the number of times of the price reduction work is two or so for example (e.g., work of attaching 50%-discount label one day before a best-before date, and attaching 35%-discount labels two days before the best-before date). In contrast to this, according to the price presentation system 1 of the present embodiment, changing display contents of the electronic shelf label 2 allows the number of times of price reduction to be set larger than that in the conventional case, and allows a timing of changing price reduction rates or the like to be flexibly set.

Thus, a workload on a store staff for price reduction work is reduced, and a profit of the store can be increased from that in the conventional case. For example, a price reduction rate is set in such a way that, more than three days before the best-before date, the price reduction rate becomes a rate (e.g., 10% three days before the best-before date, and 5% four days before the best-before date) that is lower than that in the conventional case where 50%-discount labels are attached one day before the best-before date, and 35%-discount labels are attached two days before the best-before date. Thereby, a stock quantity of the products one or two days before the best-before date is reduced. For this reason, the number of the products that are targets for 50% price reduction for example is relatively reduced. Thus, an entire profit can be increased from that in the conventional case even when the same quantity of the products as that in the conventional case are sold.

A method for determining one or more markdown codes displayed on the electronic shelf label in association with best-before dates of each product code, and determining a price reduction rate associated with each of the markdown codes is not limited to this, and may be a determination method by a rule base, or may be a determination method of to which a trained model is applied.

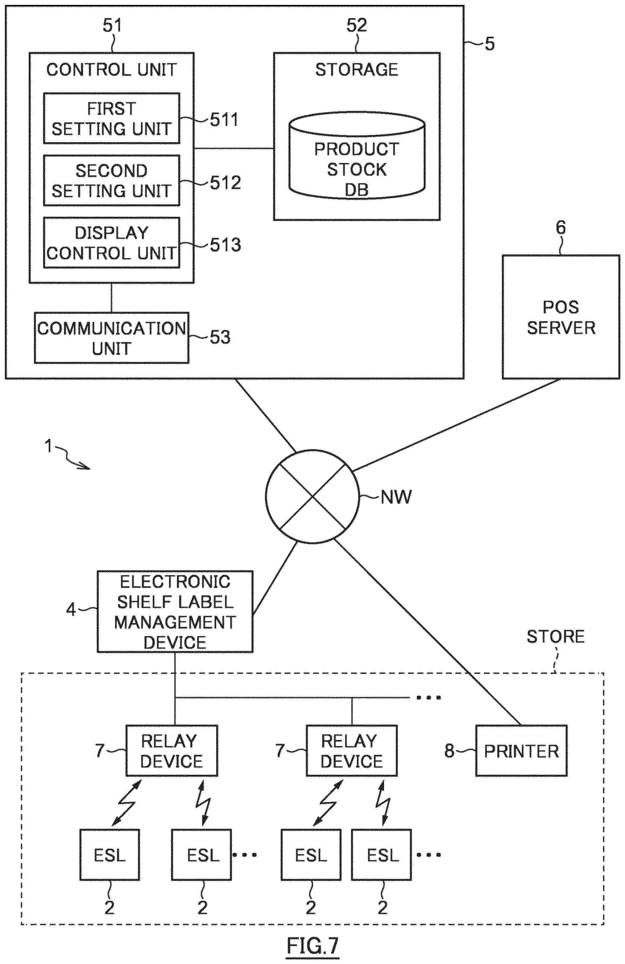

Next, a system configuration of the price presentation system 1 according to the one embodiment is described with reference to FIG. 7. As illustrated in FIG. 7, the price presentation system 1 according to the present embodiment includes an electronic shelf label management device 4, a store server 5, a POS server 6, one or more relay devices 7 installed in the store, one or more electronic shelf labels 2 installed in the store, and a printer 8 arranged in the store. The price presentation system 1 is configured in such a way as to be able to present the price reduction information of products to users in the store via the electronic shelf label 2.

The electronic shelf label management device 4, the store server 5, and the POS server 6 are connected to each other via a network NW in such a way as to be communicable with each other. The network NW is the Internet, a local area network (LAN), a wide area network (WAN), or the like, for example, but is not limited to these.

The printer 8 issues labels each printed with a product name, a product code, a best-before date, a markdown code, and the like. The printer 8 receives, from the store server 5, label information for each product based on a product stock database. The printer 8 makes printing based on the label information. A store staff attaches the labels printed by the printer 8, to packs or the like of the products, and places the packs or the like in a product shelf.

In FIG. 7, the electronic shelf label management device 4 is a device that manages a plurality of the electronic shelf labels 2 installed in the store. The electronic shelf label management device 4 holds data related to the specific electronic shelf label 2 associated with each product code.

The electronic shelf label management device 4 performs processing (the below-described ESL display switching processing) of individually switching display contents for each electronic shelf label (ESL) 2 in the store via the relay device 7, based on an ESL display switching request received from the store server 5. The ESL display switching processing includes individually transmitting display data to each electronic shelf label 2. For example, the display data include one or more markdown codes for price reduction targets, concerning each product code for example, and includes data such as a price reduction rate associated with each markdown code, as illustrated in FIG. 4.

The relay device 7 is a wireless gateway device for example, communicates with one or more electronic shelf labels 2 in a wireless manner, and transmits the display data to each electronic shelf label 2.

As illustrated in FIG. 7, the store server 5 includes a control unit 51, a storage 52, and a communication unit 53. The control unit 51 is constituted mainly by a microprocessor, and controls the entire store server 5. For example, the microprocessor included in the control unit 51 executes, as a load, a server program recorded in the storage 52. Thus, for example, the microprocessor performs processing of determining, for each product code, one or more markdown codes to be displayed on the associated electronic shelf label 2, and processing of associating the one or more markdown codes with respective associated price reduction rates. The product stock database is referred to in the execution of these pieces of processing.

The control unit 51 executes the server program, and thereby implements functions of a first setting unit 511, a second setting unit 512, and a display control unit 513.

The first setting unit 511 sets, for each product, an identifier associated with time limit information related to an expiration date. For example, the first setting unit 511 sets, for each product code, a markdown code as the identifier associated with the time limit information related to the expiration date such as a best-before date or a consuming time limit.

The second setting unit 512 sets, for each product, price reduction information associated with the time limit information related to the expiration date. For example, the second setting unit 512 sets, for each product code, a value of a price reduction rate or the like as the price reduction information associated with the time limit information related to the expiration date such as the best-before date or the consuming time limit. For example, the second setting unit 512 sets the price reduction information (e.g., the price reduction rate in relation to a standard price of the product) that is to be associated with each of the one or more markdown codes. In this case, the one or more markdown codes are associated with the products that are among the products having the different expiration dates such as the best-before dates or the consuming time limits concerning the same product code and that are set as price reduction targets, based on present time.

The display control unit 513 associates the identifier set by the first setting unit 511, with the price reduction information set by the second setting unit 512. The display control unit 513 causes the electronic shelf label 2 to display the identifier and the price reduction information associated with each other. The electronic shelf label 2 functions as a display device that displays information concerning the products. For example, the display control unit 513 associates, with the price reduction information, the markdown code associated with the product set as the price reduction target, thus generates display data, and causes the electronic shelf label 2 displaying the information concerning the products to display the generated display data, as illustrated in FIG. 4.

In the one embodiment, depending on a stock of the product for example, the second setting unit 512 may set the price reduction information for the product to which the identifier is attached. For example, the second setting unit 512 refers to a stock quantity in the product stock database. Thus, the second setting unit 512 sets, by a rule base or by using a trained model, price reduction rates of products to which one or more markdown codes (i.e., one or more markdown codes to be displayed on the electronic shelf label 2) associated with price reduction target products. For example, in a case of setting by the rule base, the second setting unit 512 may set, depending on a stock quantity of each product, one or more markdown codes to be displayed on the electronic shelf label 2, and a price reduction rate or the like associated with each markdown code. For example, in order to prevent products from remaining unsold, the second setting unit 512 can make the setting of increasing a price reduction rate or increasing the number of markdown codes to be displayed, when a stock quantity is larger than an expected quantity.

In a case of using the trained model in the setting, the trained model is constructed in advance as follows, for example. Weather, a temperature, an event in the store, a stock quantity, the number of remaining days before a best-before date, and the like are used as factors for each product. Thus, the trained model is caused to learn a price reduction start date and a price reduction rate that minimize a food loss (in a case of the product as food, a quantity of the food wasted even when the food is primarily eatable) and maximize a profit. Using the trained model in the setting enables automatic setting of a price reduction timing, which was ever set based on experience and intuition of a veteran store employee.

The storage 52 is a large-capacity storage device such as a hard disk drive (HDD), and stores the product stock database (refer to FIG. 6) and the like in addition to the server program. The control unit 51 appropriately accesses the product stock database at the time of executing the server program. Although not illustrated, the storage 52 stores regular price data (i.e., data of a regular price associated with each product code) or the like of each product sold in the store. The control unit 51 refers to the regular price data at the time of determining a reduced price.

The communication unit 53 is a communication interface for communicating with the electronic shelf label management device 4 and the POS server 6.

In FIG. 7, the POS server 6 is a server that aggregates and manages supply data, sales data, stock data, and the like of the store. The POS server 6 is connected to unillustrated register terminals in the store.

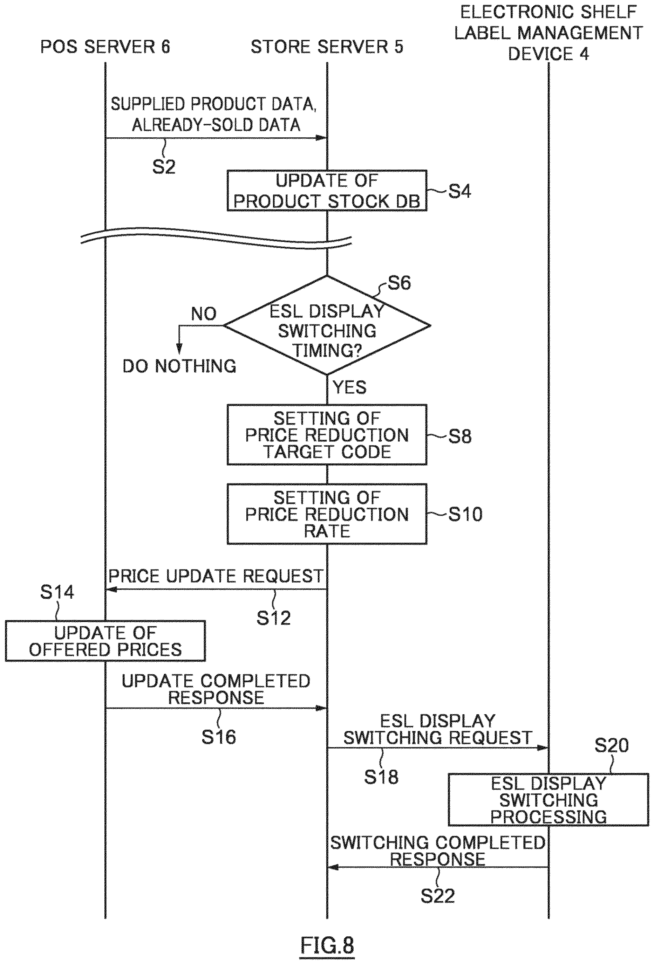

Next, operation of the price presentation system 1 according to the present embodiment is described with reference to FIG. 8. FIG. 8 is a sequence chart representing the operation at the time of switching display contents of each electronic shelf label 2 installed in the store, every day before the store opens, for example.

Referring to FIG. 8, the store server 5 first acquires supplied product data and already-sold data from the POS server 6 (step S2). The store server 5 updates the product stock database, based on the acquired supplied product data and already-sold product data (step S4).

The supplied product data are data input from an unillustrated store terminal and registered in the POS server 6 when products are delivered to the store or manufactured in the store. The supplied product data are data (data of product codes, product names, and best-before dates) concerning the products that are new selling targets in the store. The already-sold product data are data (data of product codes, product names, and best-before dates) concerning products that have been sold to users in the store and thereby no longer exist in the store. In other words, the supplied product data and the already-sold product data are data concerning the products that have entered the store and the products that have left the store. At the step S4, a value of a stock quantity of each record in the product stock database (FIG. 6) is updated based on the supplied product data and the already-sold product data.

For example, when display contents of each electronic shelf label 2 are switched every day, a display switching timing (ESL display switching timing) of the electronic shelf label 2 is set to be predetermined time before the store opens. When this predetermined time arrives (step S6: yes), the store server 5 sets one or more markdown codes (price reduction target codes) concerning price reduction targets, for each electronic shelf label 2 (i.e., for each associated product code) (step S8). For example, the store server 5 sets a price reduction rate to be associated with each markdown code set for each product code (step S10).

The settings at the steps S8 and S10 may be performed by a rule base or may be performed based on a trained model, as described above.

The store server 5 sets, for each product code for example, one or more price reduction target codes, depending on expiration dates such as best-before dates or consuming time limits, and sets, for each product code for example, price reduction rates to be associated with price reduction target codes, depending on the expiration dates such as the best-before dates or the consuming time limits, a stock quantity of the products, and the like. Then, the store server 5 transmits a price update request to the POS server 6 in order to affect offered prices that are bases of sales data. The price update request includes data including the product codes, the markdown codes or the like set in association with the product codes at the step S8, and the price reduction rates or the like set in association with the product codes at the step S10. The POS server 6 performs processing of updating the offered price for each product, based on the data (step S14). Thereby, the offered prices of the products processed by the register terminal in the store are updated. When the POS server 6 completes the processing of updating the offered prices, the POS server 6 returns an update completed response to the store server 5 (step S16).

When the store server 5 receives the update completed response from the POS server 6, the store server 5 transmits an ESL display switching request to the electronic shelf label management device 4 (step S18). The ESL display switching request is a request for switching display contents of each electronic shelf label 2 in the store. The ESL display switching request includes data including the product codes, the markdown codes or the like set in association with the product codes at the step S8, and the price reduction rates or the like set in association with the product codes at the step S10.

When the electronic shelf label management device 4 receives the ESL display switching request, the electronic shelf label management device 4 performs ESL display switching processing (step S20). Specifically, the electronic shelf label management device 4 individually transmits display data to the electronic shelf label 2 associated with each product code. This display data include data (data of the one or more markdown codes for each product code, and the price reduction rate or the like to be associated with each markdown code) included in the ESL display switching request. The ESL display switching processing switches the display contents of each electronic shelf label 2 in the store.

When the electronic shelf label management device 4 completes the ESL display switching processing, the electronic shelf label management device 4 returns a switching completed response to the store server 5 (step S22).

As described above, according to the price presentation system 1 of the present embodiment, a markdown code label printed with a markdown code associated with an expiration date such as a best-before date or a consuming time limit is attached to each product having the expiration date such as the best-before date or the consuming time limit in the store. In the store, the electronic shelf label 2 is installed at a position where a plurality of products having the different expiration dates such as the best-before dates or the consuming time limits are placed together concerning the same product code. The electronic shelf label 2 displays the one or more markdown codes indicating price reduction target products on the present day among the products having different expiration dates such as the best-before dates or the consuming time limits concerning the same product code, and displays a price reduction rate associated with each markdown code.

For this reason, a user can easily identify the price reduction target product from the products having different expiration dates such as the best-before dates or the consuming time limits for the same product code. The user can also immediately recognize the price reduction rate of the price reduction target product. Changing display contents of the electronic shelf label 2 enables immediate change of price reduction target products among the products having different expiration dates such as the best-before dates or the consuming time limits for the same product code, enables immediate change of price reduction rates of the price reduction target products, and enables the notification to users at an appropriate timing. Thus, a staff in charge in the store is released from work of attaching markdown labels to products, and efficiency of price reduction work or the like at the time of changing offered prices in the store can be improved.

### (2) Second Embodiment

Switching of markdown codes is not limited to daily switching, but may be performed hourly. For example, the markdown codes may be switched a plurality of times a day, for products such as side dishes and boxed meals that are produced a plurality of times a day.

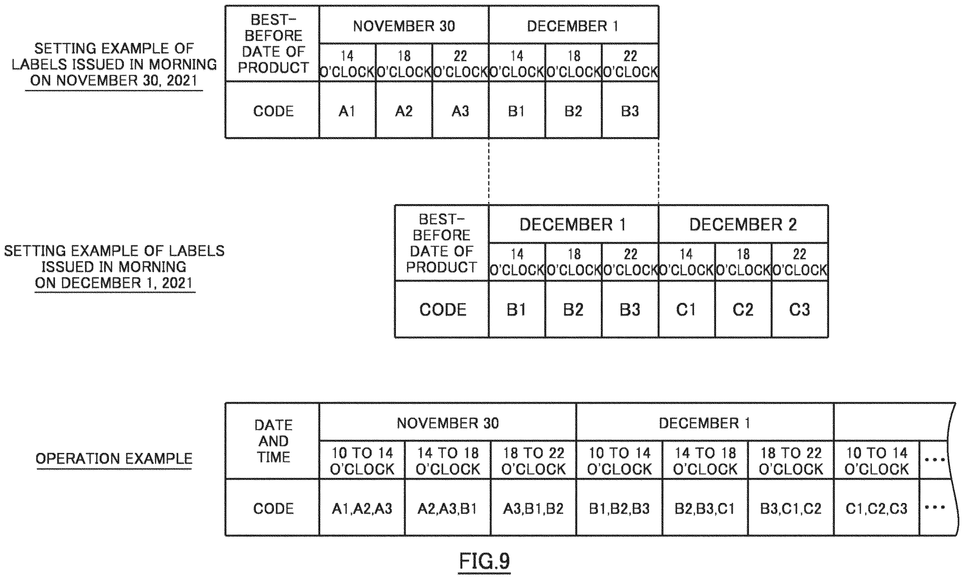

A setting example and an operation example of the markdown codes in a case where the markdown codes are switched a plurality of times in one day are described with reference to FIG. 9.

FIG. 9 exemplifies the setting example ("setting example of labels") of markdown codes to be printed on labels, and the operation example ("example of operation") of price reduction of products in the store.

A plurality of the markdown codes are provided depending on periods (days and hours) to expiration dates such as best-before dates of the products.

For example, in FIG. 9, in the morning for example on November 30, 2021, labels are issued comprehensively for products whose expiration dates such as the best-before dates arrive on the present day or the next day, and are attached to the products. In this example, after the labels are once attached to the products whose expiration dates such as the best-before dates arrive on the next day, other labels such as markdown labels do not need to be issued. In the example illustrated in FIG. 9, the markdown codes of "A1 ", "A2", and "A3" are assigned to the products whose expiration dates such as the best-before dates arrive at 14 o'clock, 18 o'clock, and 22 o'clock on November 30, 2021, respectively, and the markdown codes of "B1", "B2", and "B3" are assigned to the products whose expiration dates such as the best-before dates arrive at 14 o'clock, 18 o'clock, and 22 o'clock on December 1, 2021, respectively,

Similarly, in FIG. 9, in the morning for example on December 1, 2021, labels are issued comprehensively for products whose expiration dates such as the best-before dates arrive on the present day or the next day, and are attached to the products. In the example illustrated in FIG. 9, the markdown codes "B 1", "B2", and "B3" are assigned to the products whose expiration dates such as the best-before dates arrive at 14 o'clock, 18 o'clock, and 22 o'clock on December 1, 2021, respectively, and the markdown codes "C1", "C2", and "C3" are assigned to the products whose expiration dates such as the best-before dates arrive at 14 o'clock, 18 o'clock, and 22 o'clock on December 2, 2021, respectively,

In this manner, when the markdown codes each indicate a date and time of an expiration date such as a best-before date, the markdown codes assigned in the present embodiment each include a combination of a sign (one example of a date identifier) such as "A", "B", or "C" associated with the date of the best-before date and a sign (one example of a time identifier) such as "1", "2", or "3" associated with the time. In other words, when the time limit information indicates a date, the first setting unit of the store server 5 can set "A", "B", "C", or the like as a date identifier associated with the date, as illustrated in FIG. 9 for example, and when the time limit information indicates a date and time, the first setting unit of the store server 5 can set "A1", "A2", "A3", or the like as a date identifier associated with the date and a time identifier associated with the time, as illustrated in FIG. 9 for example.

In FIG. 9, markdown codes for price reduction target products change every day, and are notified to users via the electronic shelf label associated with each product in the store.

In the operation example of FIG. 9, on November 30, 2021, price reduction target products among the products in the store change depending on predetermined time (e.g., 10 o'clock, 14 o'clock, and 18 o'clock).

In other words, price reduction target products in a period between 10 o'clock and 14 o'clock are products whose labels are printed with "A1", "A2", or "A3" as the markdown codes. Price reduction target products in a period between 14 o'clock and 18 o'clock are products whose labels are printed with "A2", "A3", or "B1" as the markdown codes. Price reduction target products in a period between 18 o'clock and 22 o'clock are products whose labels are printed with "A3", "B1", or "B2" as the markdown codes.

On December 1, 2021 of the next day, as illustrated in FIG. 9, price reduction target products among the products in the store are products whose labels are each printed with a combination of markdown codes that is different from those on November 30, 2021. In other words, a combination of markdown codes printed on the labels for price reduction target products is updated in turn every four hours.

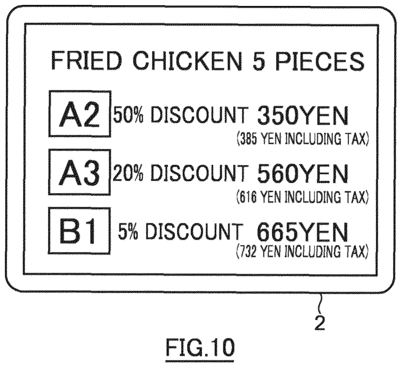

FIG. 10 illustrates an example in which the electronic shelf label installed in association with a product "fried chicken (5 pieces)" displays the markdown codes of "A2", "A3", and "B1" in a time zone from 14 o'clock to 18 o'clock on November 30, 2021. A user can know that the products each having the label printed with "A2", "A3", or "B1" as the markdown code are price reduction target products during the time zone. For this reason, the user checks the markdown code printed on the label of each product placed in the product shelf, and thereby, can recognize price reduction target products among the respective products placed in the product shelf, and recognize price reduction information such as price reduction rates.

Meanwhile, after a store staff once attaches the labels to products, the store staff does not need to attach markdown labels to the products. Thus, efficiency of price reduction work or the like in the store can be improved.

The markdown codes assigned in the present embodiment each include a combination of a sign (one example of a date identifier) such as "A", "B", or "C" associated with a date of a best-before date and a sign (one example of a time identifier) such as "1", "2", or "3" associated with time of the best-before date. Thus, signs associated with dates of best-before dates can be shared in setting (e.g., the setting illustrated in FIG. 5) of markdown codes for products whose best-before dates are set in date units. In other words, signs included in markdown codes and associated with dates of best-before dates can be set uniformly for all products in the store. Accordingly, the markdown code (e.g., the markdown code "A", "B", or the like) as the same date identifier is set for an expiration date in a date unit such as a best-before date even in a case of different types of products (e.g., "fried chicken", "loin meat", and the like). Thus, the time limit information in a date unit such as the best-before date can be accurately communicated to users.

Also in the present embodiment, one or more markdown codes displayed as price reduction targets on the electronic shelf label installed for a product group associated with each product code, and a price reduction rate associated with each of the markdown codes are set individually for each of the product codes. Accordingly, one or both of the markdown code and the price reduction rate displayed on the electronic shelf label can differ since an expiration date such as a best-before date of a price reduction target product differs between the different product codes.

According to the price presentation system of the present embodiment, the markdown codes to be displayed on electronic shelf labels at predetermined time units in a day are switched. Thereby, an employee in the store does not need to make, for example, work of frequently attaching markdown labels to products having short terms to best-before dates. Thus, efficiency of price reduction work or the like can be greatly improved.

### (3) Third Embodiment

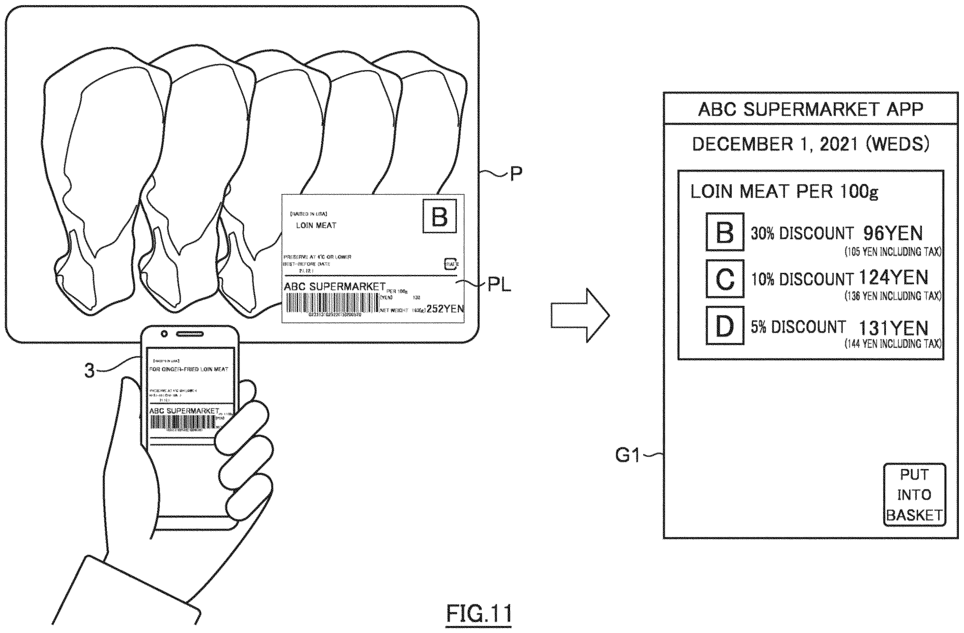

Next, a price presentation system 1A according to a third embodiment is described with reference to FIG. 11 to FIG. 14.

The price presentation system 1A is assumed to be operated without a register (i.e., be operated with payment for products that is made not via a register terminal).

A store application is installed in a user terminal 3. The store application is one for presenting prices of products in the store to the user at the time of shopping in the store. The user terminal 3 can communicate with the store server 5 via the network NW.

An unillustrated payment proxy server can communicate with the store server 5 via the network NW. The payment proxy server provides a service of payment of products for the user in the store. When the user does not pay for the product via the store application, the payment proxy server is unnecessary in the price presentation system 1A according to the present embodiment.

According to the price presentation system 1A of the third embodiment, predetermined operation on the store application in the user terminal 3 causes code information of a label PL of a product P to be read as illustrated in FIG. 11. Thereby, the store application causes an image G1 to be displayed. The image G1 includes price reduction information for the reading target product P. Markdown codes and the price reduction information are displayed in association with each other in the image G1. The markdown code is set for each expiration date such as a best-before date of the price reduction target product, concerning the product P. The price reduction information includes a price reduction rate or the like set depending on the expiration date such as the best-before date, a stock quantity, a property, and the like of the price reduction target product.

According to the price presentation system 1A of the present embodiment, the user can check the price reduction information of the product even when the user does not check the electronic shelf label or even when the electronic shelf label is not installed for each product.

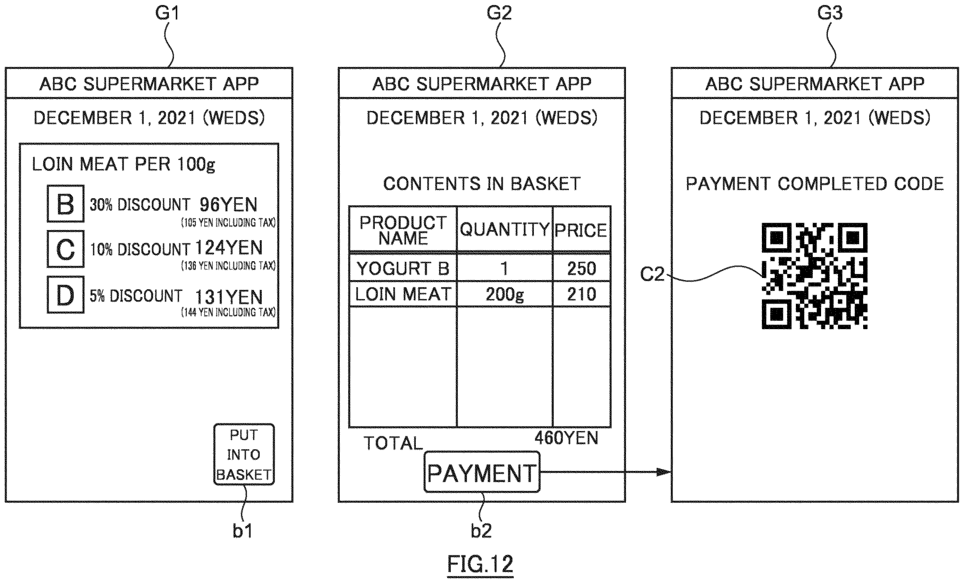

Next, a method for using the store application in the user terminal 3 is described with reference to FIG. 12. FIG. 12 illustrates an image transition example of the store application in the user terminal 3.

Execution of the store application enables the user to check markdown codes and price reduction rates and then pay for a product selected by the user. The markdown codes indicate price reduction products among products read in the store. Images G1 to G3 in FIG. 12 illustrate the method for using the store application when the user checks prices of the products, adds the products to a purchase schedule list (basket), and pays for the products.

In an assumed case of FIG. 11, the code information of the label PL of the product P read by the store application includes, as product information of the product P, a product code, time limit information concerning an expiration date such as a best-before date or a consuming time limit, and information of a weight of the product P, for example.

The user views the information included in the image G1 for example, and can select whether to add the product P to the purchase schedule list (basket), as illustrated in FIG. 12.

In a case of adding the product P to the purchase schedule list, for example, the user operates a button b1 ("put into basket ") displayed on the image G1, and thereby causes the image G2 to be displayed to notify the user that the product P has been added to the purchase schedule list. Here, as illustrated in FIG. 11, the code information of the label PL of the product P read by the store application includes the product code of the product P and the time limit information concerning the expiration date such as the best-before date of the product P. Thus, an offered price of the product P is determined based on the price reduction rate of the product P that is set by the store server 5 from the product code of the product P and the time limit information. The determined offered price of the product P is displayed in the purchase schedule list. Here, the user puts the product P, which is picked up by the user, into an actual basket or shopping cart of the store.

In a case of making payment, the user operates a button b2 (payment button) in the image G2, and thereby causes the payment to be made by the store server and causes the store application to display the image G3 including code information C2 as a payment completed code. The payment completed code indicates that the payment for the product has been completed. The payment completed code includes a payment ID (described below) that identifies the payment. The payment completed code is used for notifying the store or a store staff that payment for the products in the basket has been completed.

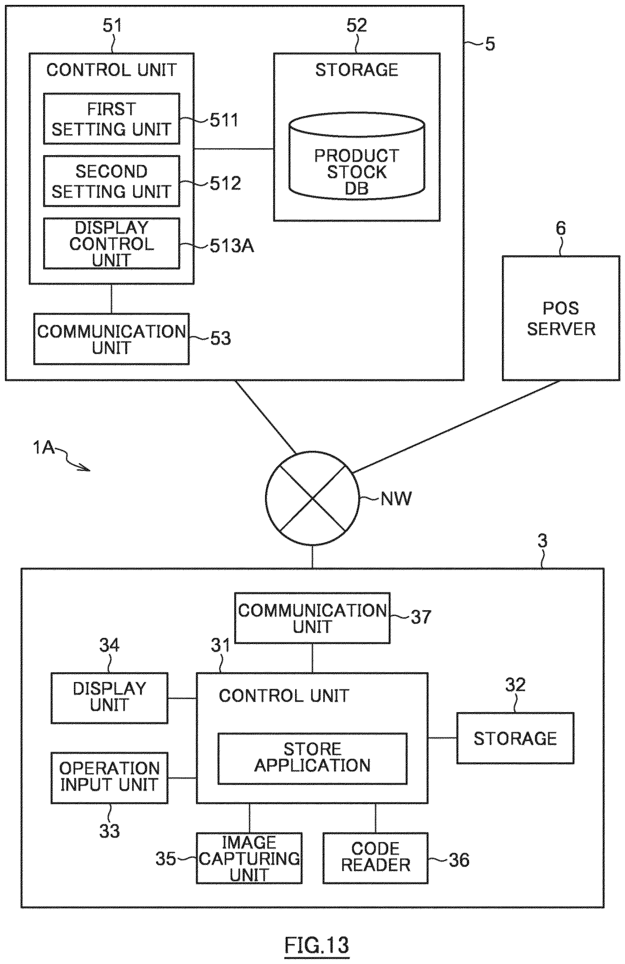

Next, a configuration of the price presentation system 1A according to the present embodiment is described with reference to FIG. 13.

The price presentation system 1A includes the user terminal 3, the store server 5, and the POS server 6. The user terminal 3 is owned by the user who shops in the store. The user terminal 3 is a smartphone, a tablet terminal, a smartwatch, another type of wearable device, or the like.

As illustrated in FIG. 13, the user terminal 3 includes a control unit 31, a storage 32, an operation input unit 33, a display unit 34, an image capturing unit 35, a code reader 36, and a communication unit 37.

The control unit 31 is constituted mainly by a microprocessor, and controls the entire user terminal 3. For example, the microprocessor included in the control unit 31 loads and executes a program of the store application recorded in the storage 32, and displays the execution result on the display unit 34.

The storage 32 is a nonvolatile memory. For example, the storage 32 is a solid state drive (SSD) such as a flash memory. The storage 32 stores, in addition to the program of the store application, data, files, and the like generated by execution of the store application.

The operation input unit 33 is, for example, a touch panel type of input device provided in a display panel of the user terminal 3. The operation input unit 33 communicates, to the store application, an operation input made to the display panel.

Examples of the display unit 34 include a liquid crystal display panel and an organic EL panel. The display unit 34 displays an execution result of the store application. The display unit 34 displays a digital image signal generated by the image capturing unit 35.

For example, the image capturing unit 35 includes an optical lens and an image pickup element (image sensor) that converts incident light from the optical lens into an electrical signal. The image capturing unit 35 sequentially generates digital images, and outputs the generated digital images to the display unit 34.

The code reader 36 analyzes code information or the like included in the image signal generated by the image capturing unit 35, and thereby extracts (acquires) data (a product code, time limit information, and the like) from the code information displayed on the label, for example.

The communication unit 37 is a communication interface for communicating with the store server 5.

The store server 5 has a configuration roughly similar to that illustrated in FIG. 7, but differs in including a display control unit 513A. The display control unit 513A performs processing in response to a request from the store application, and thereby generates display data (e.g., display data including the price reduction information indicated in the image G1 in FIG. 11) to be displayed by the store application. In other words, when the user terminal 3 acquires a product code, time limit information, and the like (which are one example of product information) from product label information or the like of a product, the display control unit 513A associates an identifier with the set price reduction information, and thus, causes the user terminal 3 to display the information concerning the product. In this case, the identifier is set for a product associated with the product code, the time limit information, and the like.

The communication unit 53 communicates with the store application in the user terminal 3, based on HTTPS, for example.

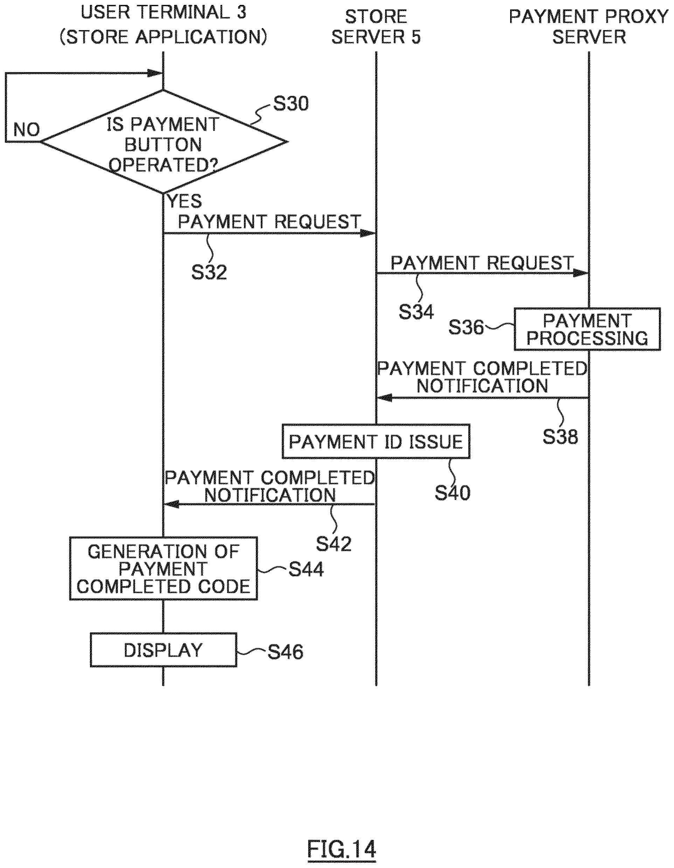

FIG. 14 is a sequence chart representing operation of the price presentation system 1A when the user makes payment for products.

Referring to FIG. 14, the user operates the payment button (step S30: yes) as illustrated in the image G2 of FIG. 12 for example, and thereby causes the store application to transmit, to the store server 5, a payment request including the purchase schedule list that is being displayed (step S32). When the store server 5 receives the payment request from the store application, the store server 5 acquires data of a user name and a payment means from an unillustrated database, and transmits, to the payment proxy server, a payment request including the acquired data and a payment amount (a total amount of the purchase schedule list) (step S34). The payment proxy server performs payment processing, based on the data provided from the store server 5 (step S36), completes the payment processing, and then transmits a payment completed notification to the store server 5 (step S38).

When the payment is completed, the store server 5 issues a new payment ID (step S40), and transmits, to the store application, a payment completed notification associated with the payment request of the step S32 (step S42). This payment completed notification includes the payment ID issued at step S40. The store application generates a payment completed code (step S44), and causes the generated payment completed code to be displayed on the user terminal 3 as illustrated in the image G3 in FIG. 12 (step S46). The generated payment completed code is a two-dimensional code. The two-dimensional code includes the payment ID included in the received payment completed notification.

### (4) Modified Examples of Embodiment

Next, price presentation systems according to modified examples of the embodiment are described.

### (4-1) First Modified Example

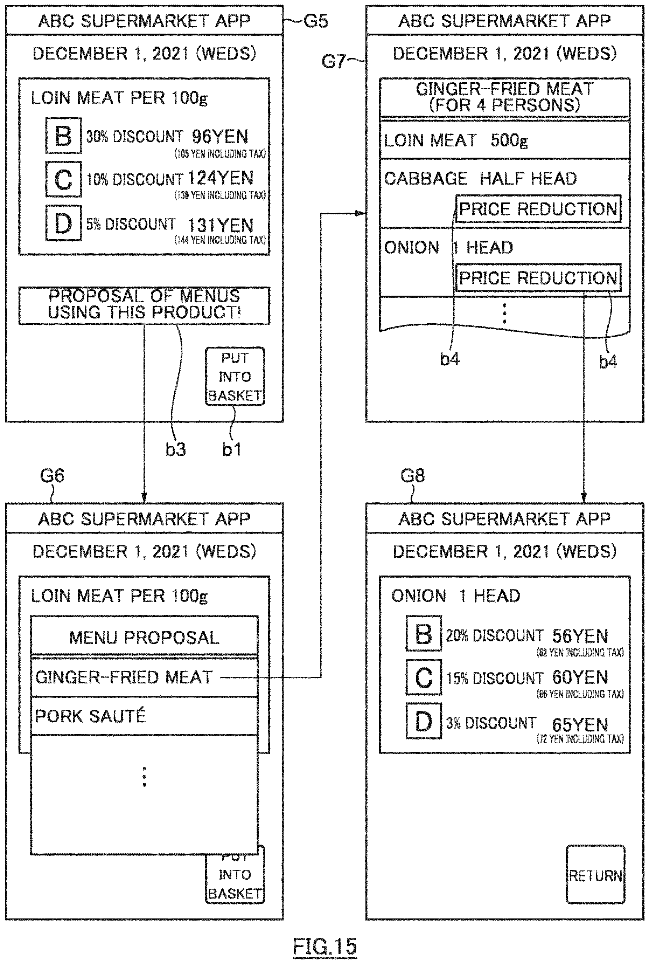

Next, the modified example for the third embodiment is described with reference to FIG. 15.

According to a configuration of the present modified example, related information of a product is also displayed at the time of presenting price reduction information of the product to a user.

FIG. 15 illustrates a transition example of a display image of the user terminal 3 in the present modified example.

An image G5 illustrated in FIG. 15 is an image that is displayed, for example, when a user causes the store application to read code information on a label of a product as illustrated in FIG. 11. At this time, a button b3 is displayed on the image G5. The button b3 is one for proposing cooking menus each using the reading target product.

Operating the button b3 on the image G5 causes an image G6 to be displayed. The image G6 includes a list of a plurality of menus each using the reading target product. The user makes operation of selecting one menu from a plurality of the menus on the image G6, and thereby causes an image G7 to be displayed. The image G7 includes a recipe of the selected menu.

For example, two or more products used in cooking the selected menu are displayed on the image G7. For example, the image G7 includes a button b4 for each product included in the two or more products but excluding the product ("loin meat" in the example of the image G5) whose code information has been already read. The button b4 is one for displaying price reduction information.

The user operates the button b4 associated with one of the products on the image G7, and thereby causes an image G8 to be displayed. In this example, the price reduction information of the product in a case where the product is "onion" is displayed.

Accordingly, the store can lead the user to purchase additional products. The user also can know a markdown code in a case of purchasing each product in the selected menu at a lower price.

In this modified example, for example, a list of a plurality of menus each using a reading target product is displayed, on the image G6, as related information of the product that has become the reading target by operation of the user. For this purpose, the store server 5 includes a database in which each product code is associated with a plurality of menus of cooking that uses the product. The store server 5 refers to the database and thereby generates a list of a plurality of menus.

In this modified example, when a menu (one example of item information indicating an item) is selected by operation of the user, the control unit 51 associates a set identifier and set price reduction information with each other for a product related to the menu, and thus causes the user terminal 3 (one example of a second display device) to display the information concerning the product.

For example, when the button b3 on the image G15 in FIG. 15 is operated, the control unit 51 reads, out from the database, information of a plurality of menus associated with a processing target product code (the product code associated with the product "loin meat" in the case of the image G5). Thus, the control unit 51 transmits, to the store application, display data including a plurality of the menus. Thereby, the image G6 is displayed. When operation of selecting one of the menus is performed on the image G6, the control unit 51 transmits, to the store application, display data including information concerning a plurality of products of different product codes related to the selected menu. Thereby, the image G7 is displayed. Further, when operation (operation of selecting one of the buttons b4) of selecting one of the product codes is performed on the image G7, the control unit 51 associates, with price reduction information, markdown codes set for a product associated with the selected product code. Thus, the control unit 51 transmits, to the store application, display data concerning the product. Thereby, the image G8 is displayed.

When a product that has become a reading target by operation of the user is a product having a close expiration date such as a best-before date, the store server 5 may cause the user terminal 3 to display an electronic coupon or the like for a product (e.g., another product such as a seasoning) related to the reading target product. Thereby, the user can be led to purchase the additional product. Even for a case where a product that has become a reading target by operation of the user is not a product having a close time limit such as a best-before date, the store server 5 causes the database to store one or more products that can be purchased in a combination with the reading target product. In such a case, the store server 5 refers to the database. As a result, when the one or more products include a price reduction target product, the store server 5 may cause the user terminal 3 to display information (including markdown codes, price reduction information, and the like) concerning the price reduction target product. Thereby, the user can be led to additionally purchase the price reduction target product.

In this modified example, an output destination of the price reduction information is not limited to the user terminal 3, and may be a digital signage (one example of a second display device) in the store. In this case, the digital signage in the store displays information concerning a predetermined combination including a product with a markdown code for price reduction. For example, the digital signage displays a message of proposing "ginger-fried meat" as a menu (item information) of cooking that uses the predetermined combination of products including the product with the markdown code. In this case, the digital signage further displays, as the information concerning the predetermined combination, price reduction information (a markdown code and a price reduction rate) and the like concerning each of the products that are, for example, "loin meat", "cabbage", "onion", and the like as ingredients of "ginger-fried meat". Thereby, sale of each product is promoted.

### (4-2) Second Modified Example

The control unit 51 of the store server 5 may set a price reduction rate or a price reduction extent for each combination of products with markdown codes.

For example, the store server 5 determines a price reduction rate for a combination of two or more products, for a user purchasing the two or more products that the store wishes to sell out (e.g., avoid discarding). In other words, the store server 5 determines the price reduction rate for the combination of the two or more products in such a way as to be a price reduction rate higher than a price reduction rate in a case where the each of two or more products is singly purchased. Thereby, user's purchase of the products that the store wishes to sell out can be promoted.

Such special price reduction information for the combination of the products may be displayed on the electronic shelf labels associated with the individual products. However, preferably, such special price reduction information is provided by a digital signage or the like installed in the store. In other words, for a case where the user purchases the two or more products with markdown codes, the store server 5 may change the price reduction rate of each of the products, and may cause the user terminal 3 or the digital signage to display, for each product code, the product whose price reduction rate is changed (e.g., price reduction rate of vegetables is x%, a price reduction rate of meat is x%, and the like). Thereby, user's purchase of a plurality of the products can be promoted.

### (4-3) Third modified Example

A digital signage (one example of a second display device) may be arranged in the store, and the digital signage may display price reduction information of a product with a higher priority for quick selling desired by the store. In this example, the store server 5 and the digital signage in the store can communicate with each other via a network.

The store server 5 controls the digital signage in such a way as to display price reduction information for a product code, based on the product code of a product with a higher priority that is input by a store staff in charge via an unillustrated store terminal. In this case, the store server 5 may set, in the product stock database, a price reduction rate or the like of the product, depending on the priority of the product desired to be quickly sold (desired to be quickly purchased). Thus, the store server 5 may cause the digital signage to display, as information concerning the product, information including a markdown code, the price reduction rate, and the like.

In the present modified example, the information concerning the product with a higher priority for quick selling desired by the store is effectively appealed to users in the store.

### (4-4) Fourth Modified Example

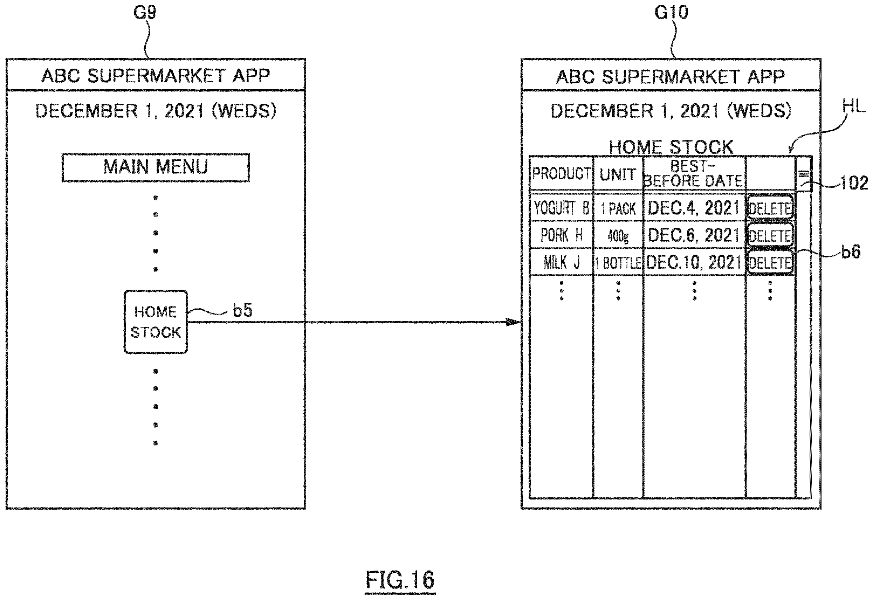

Next, the fourth modified example is described with reference to FIG. 16.

In the present modified example, the store application has a function of managing a stock in a home of the user.

In the present modified example, for example, the storage 32 of the user terminal 3 stores a home stock database of products. The store application adds data of each product in a purchase schedule list to the home stock database, each time payment for the purchase schedule list of the products is completed. When the user consumes or discards the product, the store application deletes, from the home stock database, the product included in the home stock database and selected, for example, based on operation or the like of the user.

In the present modified example, the home stock database of the user may be stored on a side of the store server 5, for example.

FIG. 16 exemplifies a method for using the store application at the time of managing a home stock. In the present modified example, a main menu of the store application includes a button b5 ("home stock") as illustrated in an image G9 of FIG. 16. Operating the button b5 causes an image G10 to be displayed. The image G10 includes a home stock list HL. The home stock list HL is a list of products based on the home stock database. When the products included in the home stock list HL cannot be on one displayed image, all the products can be viewed by a scroll bar 102. When the user consumes or discards the product in the home, the user can delete the associated product from the home stock list HL (i.e., delete the product from the home stock database) by operating a button b6 ("delete") or the like.

The present modified example can visualize how many products exist in the home of the user and when tasting limits of the products arrive. Thereby, the present modified example can contribute to a decrease in a food loss in the home, for example. The store application may refer to the home stock database. Thus, when a product (e.g., "pork" in the example of FIG. 16) having a close time limit such as a best-before date exists, the store application may ask the store server 5, and thereby, the store server 5 may propose a menu (in the example of FIG. 15, "ginger-fried" and "pork sauté" displayed on the image G6) using the product having the close time limit such as the best-before date. In this case, the store server 5 may propose a product ("cabbage", "onion", and the like displayed on the image G7 or the image G8 illustrated in FIG. 15) that is included in products used in combination with the product having the close time limit such as the best-before date and that is a price reduction target product, and propose the price reduction information or the like. Data acquired by scanning a product by the user himself or herself in the store are incorporated in the home stock database. For this reason, labor of preparing the home stock database is substantially unnecessary.

In the present modified example, the control unit 51 of the store server 5 functions as the following acquisition unit and providing unit.

When payment for the product is already completed by the user, the acquisition unit acquires, as product stock information of the user, product information and best-before date information acquired by the user terminal 3.

Based on a request of the user, the providing unit provides, to the user terminal 3, the product stock information of the user acquired by the acquisition unit.

### (4-5) Fifth Modified Example

A code associated with a best-before date can be used as a freshness management code indicating freshness of the product, instead of being used as a markdown code for communicating price reduction information of a product.

For example, when freshness management codes are set as illustrated in FIG. 5, the codes J, I, H, ... indicate higher freshness in this order for the products with the labels issued on November 30, 2021. For this reason, for example, a digital signage in the store may be caused to display a message appealing that the products with the labels of J, I, and H are fresh. The store server 5 causes the database to previously store information of a price reduction rate or the like for a case where a plurality of products having higher freshness are purchased. In this case, the store server 5 causes the digital signage or the user terminal 3 to display a message or the like indicating that price reduction applies to the case where a plurality of the products having higher freshness are purchased. Thereby, purchase willingness of a user having higher sensitivity to freshness than to a price can be promoted.

The embodiments of the information processing device, the information processing method, and the program of the present invention are described above. However, the present invention is not limited to the above-described embodiments. The above-described embodiments can be variously improved or modified within a range that does not depart from the essence of the present invention. For example, the individual technical feature described in each of the above-described embodiments or each of the above-described modified examples can be appropriately combined with a part or all of the other embodiments and the other modified examples as long as a technical contradiction does not occur.

According to one embodiment, a non-transitory storage medium storing the above-described program is disclosed.

In the first embodiment, at least a part of the functions of the store server 5 may be implemented by software of the electronic shelf label management device 4, and a part of the functions of the electronic shelf label management device 4 may be implemented by software of the store server 5. The functions of the electronic shelf label management device 4 and the functions of the store server 5 may be each dispersed and implemented in the user terminal 3 and the store server 5, depending on necessity.

In the third embodiment, at least a part of the functions of the store server 5 may be implemented by software of the user terminal 3, and a part of the functions of the user terminal 3 may be implemented by software of the store server 5. The functions of the user terminal 3 and the functions of the store server 5 may be each dispersed and implemented in the user terminal 3 and the store server 5, depending on necessity.

The functions executed by the store server 5 may be distributed to be executed by a plurality of devices.

The present invention is related to Japanese patent application No. 2021-192812 filed with the Japan Patent Office on November 29, 2021, and the entire contents of these applications are incorporated in this description by reference.

## Claims

1. An information processing device comprising:
a first setting unit that sets an identifier for each of products, the identifier being associated with time limit information related to an expiration date;
a second setting unit that sets price reduction information for each of the products, the price reduction information being associated with the time limit information related to the expiration date; and
a display control unit that causes a display device to display information concerning the product, associating the identifier set by the first setting unit with the price reduction information set by the second setting unit.

2. The information processing device according to claim 1, wherein
when the time limit information indicates a date, the first setting unit sets a date identifier associated with the date, or when the time limit information indicates a date and a time, the first setting unit sets a date identifier associated with the date and a time identifier associated with the time.

3. The information processing device according to claim 1 or 2, wherein
the second setting unit sets the price reduction information for the product, depending on a stock of the product.

4. The information processing device according to any one of claims 1 to 3, wherein
depending on types of the products, the second setting unit individually sets the price reduction information to be associated with the products with same identifier among identifiers.

5. The information processing device according to any one of claims 1 to 4, wherein
a label is attached to the product, the label being printed with the identifier set by the first setting unit for each of the products.

6. The information processing device according to any one of claims 1 to 5, wherein
the second setting unit sets a price reduction rate or a price reduction extent of the product, for each combination of the products each with the identifier.

7. The information processing device according to any one of claims 1 to 6, wherein
when item information indicating an item is selected by operation of a user, the display control unit causes a second display device to display information concerning the product, associating, for the product related to the item information, the identifier set by the first setting unit with the price reduction information set by the second setting unit.

8. The information processing device according to any one of claims 1 to 6, wherein
for the product whose price reduction rate is set depending on a priority for a selling desire, the display control unit associates the identifier set by the first setting unit with the price reduction information set by the second setting unit, and causes a second display device to display information concerning the product.

9. The information processing device according to any one of claims 1 to 8, wherein
the information processing terminal can communicate with a user terminal, and
when the user terminal acquires product information from the product, the display control unit causes the user terminal to display information concerning the product, associating, for the product associated with the product information, the identifier set by the first setting unit with the price reduction information set by the second setting unit.

10. The information processing device according to any one of claims 1 to 9, being capable of communicating with a user terminal, further comprising:
an acquisition unit that acquires, as product stock information of the user, product information and the time limit information acquired by the user terminal, when payment for the product is already completed by the user; and
a providing unit that provides the user terminal with the product stock information acquired by the acquisition unit, based on a request of the user.

11. An information processing method comprising:
setting an identifier for each of products, the identifier being associated with time limit information related to an expiration date;
setting price reduction information for each of the products, the price reduction information being associated with the time limit information related to the expiration date; and
causing a display device to display information concerning the product, associating the identifier set by the first setting unit with the price reduction information set by the second setting unit.

12. A program causing a computer to execute:
a step of setting an identifier for each of products, the identifier being associated with time limit information related to an expiration date;
a step of setting price reduction information for each of the products, the price reduction information being associated with the time limit information related to the expiration date; and
a step of causing a display device to display information concerning the product, associating the identifier set by the first setting unit with the price reduction information set by the second setting unit.
